# EUROPEAN PATENT SPECIFICATION

(11) **EP 3 351 483 B1**
(45) Date of publication and mention of the grant of the patent: **21.10.2020**
(21) Application number: 16846040.0
(22) Date of filing: 02.06.2016
(51) Int. Cl.: B65D 33/00, B65D 65/40

(54) **POUCH CONTAINER, POUCH CONTAINER PACKAGE MATERIAL, AND POUCH CONTAINER MANUFACTURING METHOD**
BEUTELBEHÄLTER, BEUTELBEHÄLTERVERPACKUNGSMATERIAL UND BEUTELBEHÄLTERHERSTELLUNGSVERFAHREN
RÉCIPIENT À POCHE, MATÉRIAU D'EMBALLAGE DE RÉCIPIENT À POCHE, ET PROCÉDÉ DE FABRICATION DE RÉCIPIENT À POCHE

(30) Priority: 15.09.2015 JP 2015181576
(43) Date of publication of application: 25.07.2018
(73) Proprietor: Fuji Seal International, Inc., Osaka-shi, Osaka 532-0003 (JP)
(72) Inventor: KAMINAGA, Masahiro, Osaka-shi Osaka 532-0003 (JP)
(74) Representative: Winter, Brandl, Fürniss, Hübner, Röss, Kaiser, Polte - Partnerschaft mbB
(86) International application number: PCT/JP2016/066324
(87) International publication number: WO 2017/047167

(56) References cited:
- JP-A- H06 344 475
- JP-A- H06 344 475
- JP-A- 2003 112 769
- JP-A- 2003 112 769
- JP-A- 2005 008 264
- JP-A- 2005 008 264
- JP-A- 2005 181 072
- JP-A- 2013 203 422
- JP-A- 2013 203 422
- JP-B2- 5 387 105
- US-A- 4 120 716

## Description

### TECHNICAL FIELD

The present invention relates to a pouch container, a pouch container package material, and a method for manufacturing a pouch container.

### BACKGROUND

On a wall-surface sheet constituting a pouch container, a printed layer for showing a product name, an illustration, the name of a manufacturer, a logo, a product explanation, or the like, is normally formed. Such a printed layer is often formed by a plate-based printing method, such as gravure printing or flexographic printing. In recent years, there has been proposed a method for forming a printed layer with a printer employing, for example, an electrophotographic process using a toner or an inkjet process. An electrophotographic process and an inkjet process are plateless printing methods that do not need a plate, and are preferably used in printing various kinds of products in a small lot.

JP 5141803 B discloses a package material obtained by printing by ink-jetting on a medium that is a laminate including a layer made mainly of polyolefin resin, a layer containing acid-modified olefin resin, and an ink receiving layer, and then overcoating the printed surface.

Each of JP H06-344475 A and JP 2005-181072 A discloses a pouch container comprising a wall portion including a base film, a sealant layer and a printed layer, wherein the edge of the printed layer is spaced apart from a container end face.

JP 5387105 B discloses a plate-printed layer provided on a platelessly printed layer.

### SUMMARY

### TECHNICAL PROBLEM

Platelessly-printed layers are inferior in water resistance to plate-printed layers formed by a plate-based printing method, such as gravure printing, and thus have a problem in that deficiency such as detachment or deterioration thereof may likely be caused due to the influence of moisture, for example, in a sterilization process, such as retort sterilization, or during use of the container.

### SOLUTION TO PROBLEM

According to the present invention, there is provided a pouch container comprising at least a first wall-surface portion and a second wall-surface portion opposed to the first wall-surface portion as wall-surface portions, and also comprising a sealing portion where rear surfaces of the respective wall-surface portions are bonded to each other, wherein the first and second wall-surface portions each include a base film and a sealant layer provided on a side of a rear surface of the base film, at least one of the first and second wall-surface portions includes a platelessly printed layer formed between the base film and the sealant layer, and an edge of the platelessly printed layer is defined at a position spaced apart from a container end face. Further, at least one of the first and second wall-surface portions includes a plate-printed layer formed between the container end face and the edge of the platelessly printed layer so that the plate-printed layer is exposed in the container end face. In addition, the edge of the platelessly printed layer overlaps an edge of the plate-printed layer, or the edge of the platelessly printed layer is spaced apart from the edge of the plate-printed layer such that the plate-printed layer does not overlap with the platelessly printed layer. It is preferable that the platelessly printed layer is formed while avoiding an area overlapping the sealing portion.

According to the present invention, there is provided pouch container package material for constituting a wall-surface portion of a pouch container, comprising: an elongate base film; a sealant layer provided on one surface side of the elongate base film; and a platelessly printed layer formed between the elongate base film and the sealant layer, wherein an edge of the platelessly printed layer is defined at a position spaced apart from a planned container end face forming portion. Further, at least one of the first and second wall-surface portions includes a plate-printed layer formed between the container end face and the edge of the platelessly printed layer so that the plate-printed layer is exposed in the container end face. In addition, the edge of the platelessly printed layer overlaps an edge of the plate-printed layer, or the edge of the platelessly printed layer is spaced apart from the edge of the plate-printed layer such that the plate-printed layer does not overlap with the platelessly printed layer. It is preferable that the platelessly printed layer is formed while avoiding an area overlapping a planned sealing portion forming area.

According to the present invention, there is provided a pouch container manufacturing method comprising: a step of making a pouch container package material for constituting a wall-surface portion of a pouch container; a step of bonding opposed rear surfaces to each other among a plurality of pouch container package materials laminated or from the pouch container package material folded to thereby form a sealing portion; and a step of cutting the pouch container package material where the sealing portion is formed into a size corresponding to the pouch container; wherein the step of making the pouch container package material includes a first step of preparing an elongate base film, a second step of forming a platelessly printed layer in a position spaced apart from a planned container end face forming portion on one surface that constitutes a rear surface of the elongate base film, by a plateless printing method, and a third step of forming a sealant layer on the one surface of the elongate base film so as to cover the platelessly printed layer. In the second step, it is preferable that the platelessly printed layer is formed while avoiding an area overlapping a planned sealing portion forming area where a sealing portion is to be formed.

### ADVANTAGEOUS EFFECTS OF INVENTION

In the pouch container according to the present invention, the edge of a platelessly printed layer formed between a base film and a sealant layer is defined at a position spaced apart from a container end face, and the platelessly printed layer is not exposed in the container end face. Here, it is considered that detachment or deterioration of a platelessly printed layer is caused mainly due to moisture or the like having invaded via a container end face and affecting the platelessly printed layer. A pouch container according to the present invention can significantly reduce the influence of such moisture. Accordingly, a pouch container according to the present invention can significantly reduce occurrence of deficiency such as detachment or deterioration of a platelessly printed layer.

It is preferable that a platelessly printed layer is formed while avoiding an area overlapping a sealing portion, as described above. A sealing portion is normally formed by heat-sealing (thermo-compression bonding) a sealant layer. As platelessly printed layers are inferior in heat resistance to plate-printed layers, a structure without a platelessly printed layer formed in an area overlapping a sealing portion can more readily prevent detachment, deterioration, or the like of a platelessly printed layer.

### BRIEF DESCRIPTION OF DRAWINGS

[FIG. 1] FIG. 1 is a front view of a pouch container that is one example of a reference embodiment.
[FIG. 2] FIG. 2 is a cross sectional view along the line AA in FIG. 1.
[FIG. 3] FIG. 3 is an enlarged view of the portion indicated by B in FIG. 2.
[FIG. 4] FIG. 4 is a cross sectional view of another example of a wall-surface sheet.
[FIG. 5] FIG. 5 is a front view of a pouch container package material that is one example of a reference embodiment.
[FIG. 6] FIG. 6 explains a process of manufacturing a pouch container that is one example of a reference embodiment.
[FIG. 7] FIG. 7 is a cross sectional view of a pouch container that is an example of an embodiment.
[FIG. 8] FIG. 8 is an exploded perspective view of a pouch container that is another example of a reference embodiment.
[FIG. 9] FIG. 9 is a cross sectional view of a pouch container that is another example of a reference embodiment.
[FIG. 10] FIG. 10 is a cross sectional view of a pouch container that is another example of a reference embodiment.

### DESCRIPTION OF EMBODIMENTS

The following describes one example of a reference embodiment in detail with reference to the drawings. The drawings referred to in the description are schematically shown, and the sizes, ratios, or the like, of the structural components shown in the drawings may differ from the actual sizes and ratios. Specific sizes, ratios, or the like should be determined in consideration of the following description. In this specification, the term "approximate" is used with the intention of meaning that a description referring to approximate similarity as an example includes not only complete similarity but also substantial similarity.

In a reference embodiment, a standing pouch and a side gusset pouch will be described as examples. The structure of the present invention may be applied to other types of pouches, such as flat pouches that include only a first wall-surface portion and a second wall-surface portion opposed to the first wall-surface portion as wall-surface portions. A wall-surface portion of a pouch container is a portion that defines an inside space of the container where contents can be stored. A standing pouch includes, as wall-surface portions, a first wall-surface portion, a second wall-surface portion, and a bottom surface gusset portion provided between the first wall-surface portion and the second wall-surface portion. A side gusset pouch includes, as wall-surface portions, a first wall-surface portion, a second wall-surface portion, and side surface gusset portions provided between the first wall-surface portion and the second wall-surface portion.

In the following, a sheet member constituting a wall-surface portion is referred to as a "wall-surface sheet," a wall-surface sheet constituting a bottom surface gusset is referred to as a "bottom surface gusset sheet," and a wall-surface sheet constituting a side surface gusset portion is referred to as a "side surface gusset sheet." A sealing portion is a portion that bonds the rear surfaces of the respective wall-surface portions including the bottom surface gusset portion and the side surface gusset portion. As a wall-surface sheet is a sheet member constituting a wall-surface portion, a sealing portion can be understood as a portion that bonds the rear surfaces of one or more wall-surface sheets. The rear surface of a wall-surface portion (a wall-surface sheet) refers to a surface that faces the inside (the side of the inside space of the container) of a container (that is, a surface that faces the outside of the container is the front surface). In the following, relative positional relationships between the respective layers constituting a wall-surface portion (a wall-surface sheet) will be described using the terms "front" and "rear."

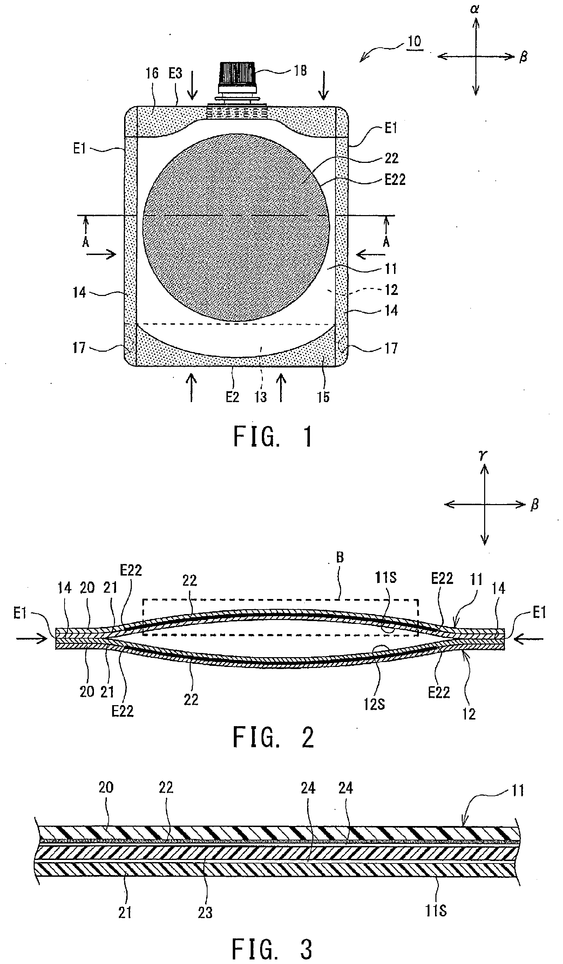

In this specification, the description is based on an assumption that the vertical direction (the longitudinal direction in FIG. 1) of a pouch container standing on a flat surface is defined as the "up-down direction," with the vertically lower side referred to as "lower" and the vertically upper side referred to as "upper," the width direction of the pouch container (the left-right direction in FIG. 1) is defined as the lateral direction, and the front-rear direction of the pouch container is defined as the "front-rear direction." In some drawings, the up-down direction is defined as the α axial direction, the lateral direction is defined as the β axial direction, and the front-rear direction is defined as the γ axial direction.

FIG. 1 is a front view of a pouch container 10 that is one example of a reference embodiment. FIG. 2 is a cross sectional view along the line AA in FIG. 1, showing the pouch container 10 sectioned in the lateral direction (the β axial direction). FIG. 3 is an enlarged view of the portion indicated by B in FIG. 2, showing a detailed laminated structure of a first wall-surface sheet 11. The drawings to be referred to below show a pouch container with no contents therein. Contents to be stored in a pouch container may be, for example, liquid substances, such as various kinds of beverages or liquid medicines, or semi-solid substances, such as jelly. Contents may be any stuff without limitation, and may be any solid substances, such as powder or particles.

As shown in FIGs. 1 and 2, the pouch container 10 is a standing pouch including a first wall-surface sheet 11, a second wall-surface sheet 12 opposed to the first wall-surface sheet 11, a bottom surface gusset sheet 13 provided between the first wall-surface sheet 11 and the second wall-surface sheet 12 as wall-surface sheets constituting wall-surface portions, and further including a sealing portion where the rear surfaces of the respective wall-surface sheets are bonded to each other. In the pouch container 10, the first wall-surface sheet 11 constitutes a first wall-surface portion, the second wall-surface sheet 12 constitutes a second wall-surface portion opposed to the first wall-surface portion, and the bottom surface gusset sheet 13 constitutes a bottom surface gusset portion between the first wall-surface portion and the second wall-surface portion. The first wall-surface portion and the second wall-surface portion have identical shapes and sizes, for example, and just overlap each other in the front-rear direction (the γ axial direction).

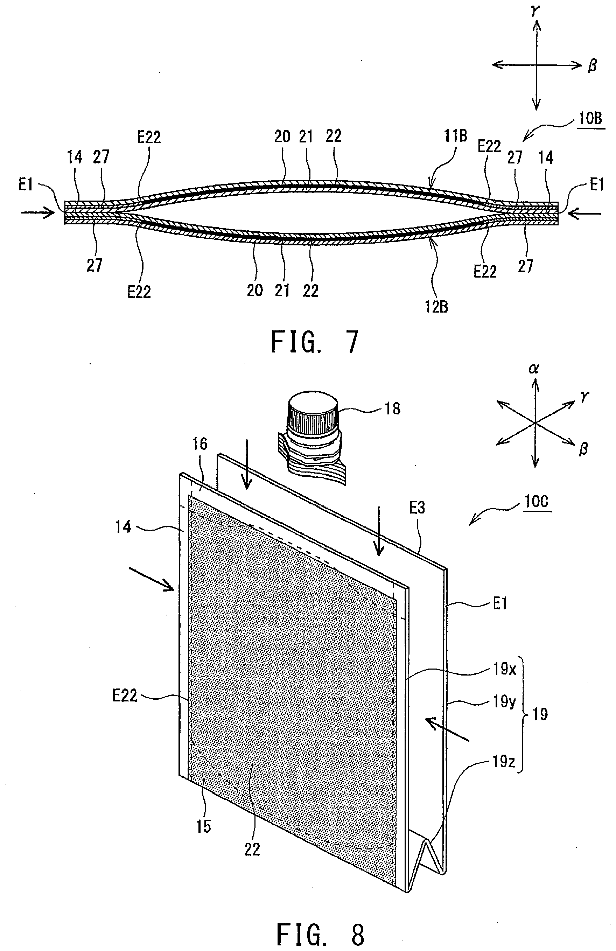

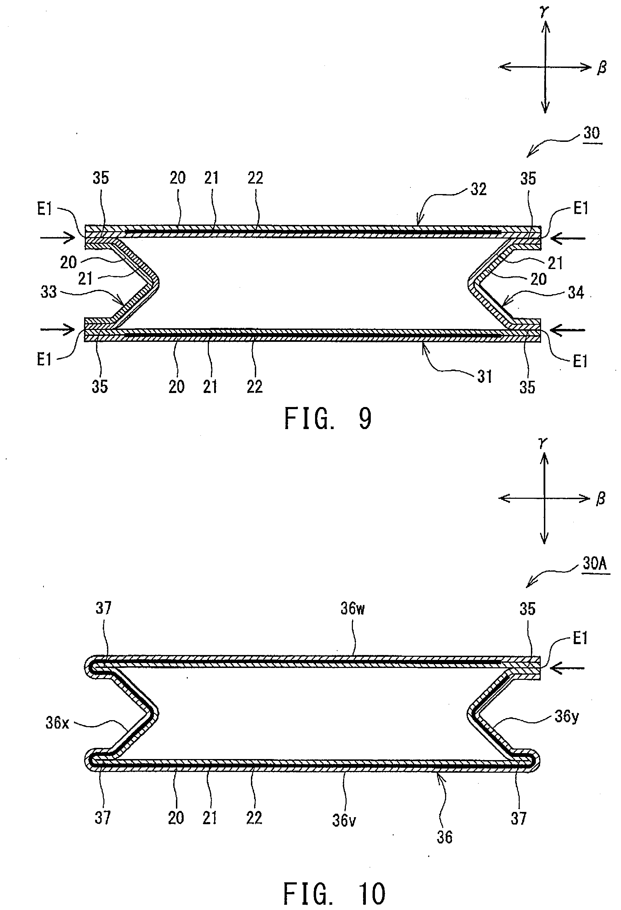

Each of the first wall-surface sheet 11 and the second wall-surface sheet 12 shown as an example in FIG. 1 (each of these wall-surface sheets may hereinafter be referred to as a "body sheet") has an approximate quadrangular shape that is long in the up-down direction (the α axial direction) in a plan view, though the body sheet may have any shape without limitation. For example, the body sheet may have a shape that is thinner (recessed) at the middle thereof in the up-down direction, a shape in which at least one of the left and right upper portions is defined diagonal relative to the up-down and lateral directions, or other shapes. A plurality of wall-surface portions of a pouch container may be made using one wall-surface sheet (see FIGs. 8 and 10 to be described later, for example).

The bottom surface gusset sheet 13 is a sheet member constituting a bottom surface gusset portion that will extend as a result of storage of contents. The pouch container 10 has a flat shape whose bottom surface gusset sheet 13 is folded with no contents therein and extends into a shape like the shape of a ship's bottom when contents are stored in the inside space of the container so that the pouch container 10 can stand by itself.

The bottom surface gusset sheet 13 is bonded to the rear surfaces of the respective body sheets in a lower part of the container so as to extend. The bottom surface gusset sheet 13 is an upright gusset sheet having a first surface sheet opposed to the first wall-surface sheet 11 and a second surface sheet opposed to the second wall-surface sheet 12, in which the upper ends of the respective sheets are bonded to each other. It is preferable that the respective both edges of the bottom surface gusset sheet 13 in the lateral direction (that is, the respective both lateral edges) reach the respective both lateral edges of the body sheets. That is, it is preferable that the bottom surface gusset sheet 13 is provided over the entire length of the pouch container 10 in the lateral direction.

The pouch container 10 has an outlet plug 18 as a pouring outlet through which to extract the contents. The outlet plug 18 has a spout held between the body sheets, for example, and a screw cap for closing the opening of the spout. In the example shown in FIG. 1, the outlet plug 18 is attached at the middle of the upper end of the container in the lateral direction. The spout of the outlet plug 18 is bonded to the respective body sheets via an upper sealing portion 16 to be described later. The pouring outlet is not limited to the outlet plug 18, and may be a channel defined by the sealing portion, for example. Alternatively, the pouch container 10 may have not a pouring outlet, but a notch for opening formed in the upper portion of the container. In this case, a resealing means (for example, a zipper) for resealing the opening may be provided.

The pouch container 10 is a soft packaging container including three wall-surface sheets, as described above, in which the edges of the respective wall-surface sheets and sealing portions formed near the edges seal the inside space of the container. The pouch container 10 has a side sealing portion 14 and a bottom sealing portion 15 as sealing portions. The upper sealing portion 16 includes a portion that bonds the rear surfaces of the wall-surface sheets, similar to the side sealing portion 14 and the bottom sealing portion 15, and a portion that bonds the rear surfaces of the wall-surface sheets with the outlet plug 18 (which may be hereinafter referred to as a "pouring outlet-included sealing portion") in-between. The pouring outlet-included sealing portion seals the inside space of the container and also bonds the outlet plug 18, or a pouring outlet, to the wall-surface sheets. Specifically, in the pouring outlet-included sealing portion, the respective body sheets are bonded to the spout of the outlet plug 18. It is preferable that each wall-surface sheet includes a sealant layer 21, and each sealing portion is formed through heat sealing, as will be described later. Container end faces E1, E2, E3 are formed in the left and right, lower, and upper portions of the pouch container 10, respectively. Specifically, the container end faces E1, E2, E3 are faces formed on the cut ends of the wall-surface sheets. The container end face E1 is formed on the respective both lateral ends of the pouch container 10; the container end face E2 is formed on the lower end; and the container end face E3 is formed on the upper end.

The side sealing portion 14 is formed along both lateral edges of the pair of opposed body sheets and their nearby areas along the up-down direction, and bonds the rear surface 11S of the first wall-surface sheet 11 and the rear surface 12S of the second wall-surface sheet 12. The upper sealing portion 16 is formed along the upper edge of the container and its nearby area, and bonds the rear surfaces 11S, 12S of the body sheets. A part of the resultant upper sealing portion 16 (the pouring outlet-included sealing portion) includes the spout of the outlet plug 18 formed between the respective body sheets, as described above. The upper sealing portion 16 of the pouch container 10 is formed, for example, after storing contents into the inside space of the container through the upper portion of the container, whereby the inside space of the container is sealed.

The bottom sealing portion 15 bonds the bottom surface gusset sheet 13 to the rear surfaces 11S, 12S of the respective body sheets in a lower part of the container in such a manner that the bottom surface gusset sheet 13 can extend. Specifically, the first surface sheet and the second surface sheet of the bottom surface gusset sheet 13 are bonded to the first wall-surface sheet 11 and the second wall-surface sheet 12, respectively. The bottom surface gusset sheet 13 has cut-outs 17 formed on the respective both lateral sides, and the rear surfaces 11S, 12S of the body sheets are directly bonded to each other in the cut-outs 17 (the sealing portion can be considered as a part of the side sealing portion 14).

As shown in FIGs. 2 and 3, each of the wall-surface sheets constituting the pouch container 10 contains at least a base film 20, and a sealant layer 21 formed on the rear surface side of the base film 20. It is preferable that each wall-surface sheet contains an intermediate layer 23 formed between the base film 20 and the sealant layer 21. In the example shown in FIG. 3, an adhesive layer 24 is formed on the front and rear sides of the intermediate layer 23, respectively. Although the first wall-surface sheet 11 is shown in FIG. 3, the layer structure shown as an example in FIG. 3 can be applied to the second wall-surface sheet 12 and the bottom surface gusset sheet 13 as well. For example, the same kinds of base films 20, sealant layers 21, intermediate layers 23, and adhesive layers 24 are used for the respective body sheets. The respective thicknesses of the base films 20, sealant layers 21, second wall-surface sheets 23, and adhesive layers 24 constituting the respective body sheets are normally substantially the same, but may differ. The base film 20, the sealant layer 21, the intermediate layer 23, and the adhesive layer 24 similar to those of the body sheet can be used for the bottom surface gusset sheet 13 as well.

At least one of the wall-surface sheets has a platelessly printed layer 22 formed between the base film 20 and the sealant layer 21, as will be described later in detail. In this reference embodiment, a platelessly printed layer 22 is formed in each of the first wall-surface sheet 11 and the second wall-surface sheet 12. Although the platelessly printed layer 22 formed in the first wall-surface sheet 11 and the platelessly printed layer 22 formed in the second wall-surface sheet 12 are illustrated in the same size in a cross-sectional view in FIG. 2, the platelessly printed layers 22 may have different sizes and arrangements, for example, depending on a letter or an illustration to be shown. The platelessly printed layer 22 may be formed in the bottom surface gusset sheet 13.

The base film 20 is required to have basic capabilities as a packaging structure, such as impact endurance, wear endurance, heat resistance, water resistance, chemical resistance, and gas barrier characteristic. The sealant layer 21 imparts heat sealing characteristic to the wall-surface sheet. As the rearmost surface of the respective wall-surface sheets (the rear surfaces 11S, 12S), sealant layers 21 are formed. The respective sealing portions are formed by heat-sealing (thermo-compression bonding) the respective wall-surface sheets with the sealant layers 21 thereof opposed to each other. The total thickness of each wall-surface sheet is, for example, 10 µm to 300 µm, preferably 20 µm to 200 µm.

As the base film 20, a single-layered film or a multi-layered film including two or more layers formed from, for example, polyesters (such as polyethylene terephthalate (PET), polyethylene naphthalate (PEN), polybutylene terephthalate (PBT), and polycarbonate (PC)), polyolefins (such as polyethylene (PE) and polypropylene (PP)), polyamides (such as Nylon-6 and Nylon-66), polyacrylonitrile (PAN), polyimide (PI), polyvinyl chloride (PVC), polyvinylidene chloride (PVDC), polymethyl methacrylate (PMMA), polyether sulfone (PES), or a copolymer of ethylene-vinyl alcohol (EVOH) is available as an example. The base film 20 may be a drawn film or an undrawn film. The thickness of the base film 20 is, for example, 10 µm to 200 µm, preferably 10 µm to 100 µm.

The sealant layer 21 is formed, for example, by laminating a single-layer film or a multi-layered film including two or more layers on the rear surface side of the base film 20. A film constituting the sealant layer 21 may be a drawn film or an undrawn film, with preferable examples thereof including films formed from, for example, low density polyethylene (LDPE), linear low-density polyethylene (LLDPE), a copolymer of ethylene-propylene (EP), cast polypropylene (CPP), biaxially oriented nylon (ON), a copolymer of ethylene-olefin, a copolymer of ethylene-acrylic acid (EAA), a copolymer of ethylene-methacrylic acid (EMAA), or a copolymer of ethylene-vinyl acetate (EVA). The thickness of the sealant layer 21 is, for example, 20 µm to 200 µm, preferably 30 µm to 180 µm.

The intermediate layer 23 serves, for example, to compensate the function of the base film 20 to thereby improve the impact endurance, heat resistance, gas barrier characteristic, or the like, of the first wall-surface sheet 11. A laminate for the intermediate layer 23 can be made by a well-practiced laminating method, such as a co-extrusion method, a dry lamination method, or a thermal lamination method. As the intermediate layer 23, a film similar to a film constituting the base film 20, for example, can be used. Employment of a polyamide film, for example, for the intermediate layer 23 can improve the impact endurance, heat resistance, or the like of the first wall-surface sheet 11. A preferred example of the first wall-surface sheet 11 is a sheet including a base film 20 made from a PET film and an intermediate layer 23 made from a polyamide film. The intermediate layer 23 may be formed from a resin film that is formed from polyvinylidene chloride (PVDC) or a copolymer of ethylene-vinyl alcohol (EVOH), for example, in order to improve the gas barrier characteristic.

The intermediate layer 23 can be formed by forming a resin film for constituting the intermediate layer 23 by a dry lamination method, for example, via the adhesive layer 24 on the rear surface of the base film 20 with the platelessly printed layer 22 formed thereon. Further, the sealant layer 21 is formed via the adhesive layer 24 on the rear surface of the intermediate layer 23. With the above, a laminated structure including the base film 20, the platelessly printed layer 22, the adhesive layer 24, the intermediate layer 23, the adhesive layer 24, and the sealant layer 21 can be formed.

The adhesive layer 24 is a layer for adhering the intermediate layer 23 and the base film 20, and the intermediate layer 23 and the sealant layer 21. Preferably, the adhesive layer 24 is formed solidly over the front and rear respective surfaces of the intermediate layer 23, although the adhesive layer 24 may be formed partially in a desired pattern. An adhesive agent for forming the adhesive layer 24 may be any adhesive agent without limitation. A thermo-sensitive adhesive agent or a pressure sensitive adhesive agent is available as an example of such an adhesive agent, and a thermo-sensitive adhesive agent that is solid at room temperature and activated to exhibit adhesiveness when heated is preferably used.

As the adhesive layer 24, a thermo-sensitive adhesive agent of emulsion type, aqueous type, solvent type, or hot-melt type, for example, may be used. A thermo-sensitive adhesive agent of solvent type or hot-melt type is preferably used, in view of water resistance or the like. The adhesive agent may include a base resin, such as a urethane resin, with a tackifier and various additive agents (for example, polyethylene wax or amide lubricant), for example, included therein. As an adhesive agent, a commercially available adhesion agent for dry lamination may be used. The adhesive layer 24 can be formed by applying the above-mentioned adhesive agent onto the base film 20, for example, by a known conventional plate-based printing method or a coating method using a general-purpose coater, and then drying to solidify. The thickness of the adhesive layer 24 may be any thickness without limitation, and is preferably 0.1 µm to 10 µm, more preferably 0.2 µm to 3 µm.

The platelessly printed layer 22 is a printed layer for showing a product name, an illustration, the name of a manufacturer, a logo, a product explanation, or the like, and is formed in any pattern in accordance with a letter, an illustration, or the like. The platelessly printed layer 22 is formed by a plateless printing method, such as an electrophotographic process or an inkjet process, that needs no plate. A plateless printing method, such as an electrophotographic process or an inkjet process, can reduce time and costs for platemaking. A plateless printing method is also referred to as digital printing or on-demand printing, and is preferably used in printing in small quantity (in printing various kinds of products in a small lot) with sufficient time and costs not affordable in platemaking, although being hardly adapted to high speed printing as gravure printing is.

In each of the first wall-surface sheet 11 and the second wall-surface sheet 12, the platelessly printed layer 22 is formed between the base film 20 and the sealant layer 21, as described above. In the example shown in FIG. 3, the platelessly printed layer 22 is formed between the base film 20 and the intermediate layer 23. The platelessly printed layer 22 is formed such that the edge E22 thereof is defined at a position spaced apart from the container end faces E1, E2, E3. That is, the platelessly printed layer 22 is formed while avoiding the container end faces E1, E2, E3 and is not exposed in the container end faces E1, E2, E3. While it is considered that detachment or deterioration of the platelessly printed layer 22 is caused mainly due to moisture or the like having invaded via the container end faces E1, E2, E3 in a sterilization process or the like and affecting the platelessly printed layer 22, employment of this structure can significantly reduce the influence of such moisture or the like.

In the example shown in FIG. 1, the edge E22 of the platelessly printed layer 22 is defined at a position spaced apart from the container end faces E1, E2, E3, and an area where the platelessly printed layer 22 is formed (which may hereinafter be referred to as a "platelessly printed area") is formed in an approximately round shape as viewed from the front. The shape of the platelessly printed area as viewed from the front may be, for example, an elliptical shape, a triangular shape, a rectangular shape, other polygonal shapes, or an indefinite shape. The boundary between the platelessly printed area and the background display may be indefinite and the shape of the platelessly printed area may not be able to be clearly defined. The shape, size, arrangement, or the like of the platelessly printed area; that is, the formation pattern of the platelessly printed layer 22, can be desirably set in accordance with a design to be shown, such as a letter, an illustration, or the like, so long as the edge E22 of the platelessly printed layer 22 is positioned spaced apart from the container end faces E1, E2, E3.

The platelessly printed layer 22 is formed on the rear surface of the base film 20, for example. The platelessly printed layer 22 may be formed on the front surface, the rear surface, or both surfaces of the intermediate layer 23 formed between the base film 20 and the sealant layer 21, or on the front surface of the sealant layer 21. In the case where the platelessly printed layer 22 is formed on the rear surface of the base film 20, the platelessly printed layer 22 is formed in an area other than an edge portion of the rear surface. The platelessly printed layer 22 may be formed directly on the rear surface of the base film 20 or via another layer. An anchor coat layer, for example, may be formed between the base film 20 and the platelessly printed layer 22. The anchor coat layer serves to improve adhesion of the platelessly printed layer 22 relative to the base film 20. In the case where an anchor coat layer is formed, it is preferable that the anchor coat layer is formed in an area other than the edge portion of the rear surface of the base film 20, similar to the platelessly printed layer 22. That is, it is preferable that the edge of the anchor coat layer is defined at a position spaced apart from the container end faces E1, E2, E3 and is not exposed in the container end faces E1, E2, E3.

The platelessly printed layer 22 may be formed in an area overlapping the sealing portions, so long as the edge E22 thereof remains spaced apart from the container end faces E1, E2, E3. Specifically, the platelessly printed layer 22 may be formed, for example, on the rear surface of the base film 20 in an area overlapping the sealing portions except the edge portion of the rear surface. However, it is preferable that the platelessly printed layer 22 is formed while avoiding an area overlapping the sealing portions. That is, it is preferable that the platelessly printed layer 22 is formed in an area not overlapping the side sealing portion 14, the upper sealing portion 16 (including the pouring outlet-included sealing portion), and the bottom sealing portion 15. Formation of the platelessly printed layer 22, which is inferior in heat resistance to a plate-printed layer, while avoiding an area overlapping the sealing portions that are formed through heat sealing can readily prevent detachment or deterioration of the platelessly printed layer 22. In the example shown in FIG. 1, the whole edge E22 of the platelessly printed layer 22 is defined in a position not overlapping the sealing portions, and is positioned in the inside of the container enclosed by the sealing portions in a plan view.

The platelessly printed layer 22 contains a toner that contains a colorant, for example. A toner normally contains a colorant in chromatic color. Observation of the platelessly printed layer 22 formed by an electrophotographic process using a toner with an optical microscope or the like reveals dots attributed to the toner particles constituting the printed layer. Meanwhile, as to the platelessly printed layer 22 formed by ink-jetting, dots attributed to ink droplets can be seen. In the platelessly printed layer 22, at least one kind of toner or a mixture of two or more kinds of toners containing different colorants form a letter, an illustration, or the like. Stacking two or more kinds of toners enables expression of various colors, including not only chromatic colors, such as red, yellow red, yellow, yellow green, green, blue green, blue, blue purple, purple, red purple, or the like, but also achromatic colors, such as white, black, or gray (including silver).

Although the platelessly printed layer 22 may be any printed layer formed by a plateless printing method, it is preferable that the platelessly printed layer 22 is formed by an electrophotographic process using a toner, in view of productivity and design property. Formation of the platelessly printed layer 22 by an electrophotographic process is achieved, for example, by charging a photoreceptor drum, drawing with a laser beam, or the like, on an area with toner deposition thereon not desired to thereby discharge the toner, adhering a toner in a desired pattern onto the photoreceptor drum, and translating the toner via a blanket onto the wall-surface sheet. For the platelessly printed layer 22 having two or more colors, the above-mentioned process may be executed for every color to translate the toner in each color onto the wall-surface sheet in each operation. Alternatively, a toner in each color may be translated each time onto a blanket through the above-mentioned process, and then dried, and the blanket with all colors thereon may be thereafter pressed onto the wall-surface sheet to thereby translate the toner in all colors thereonto.

The toner forming the platelessly printed layer 22 includes particles each having a diameter of about 1 to 15 µm, containing, for example, a binder resin, a wax, a charge control agent (CCA), and a desired colorant. A binder resin serves to bond wax, CCAs, pigments, additive agents, or the like. The binder resin may be any binder resin without limitation, and may preferably be, for example, acrylic resins, polyester resins, polystyrene-based resins (including styrene-(metha)acrylic acid ester copolymer-based resins, and styrene-conjugated diene copolymer), and epoxy resins, urethane resins, polyolefin resins, polyamide resins, cellulose resins, vinyl chloride-vinyl acetate copolymer-based resins, isocyanate resins, rosin resins, or polystyrene polyester graft copolymers. Resin that is superior in blocking resistance and low temperature fixing property is preferred.

A CCA serves to adjust charging property, with examples thereof including a negatively charged CCA, such as chromium complex, and a positively charged CCA, such as nigrosine. Wax serves to impart to a toner low temperature fixing property and releasing property at the time of fixing, and any of a natural wax, a petroleum wax, and a synthetic wax can be used.

The colorant contained in the toner may be any colorant, without limitation, that can express a desired color in accordance with a design, such as a letter or an illustration. At least one kind of known conventional dyes and pigments can be used. As a pigment, either an inorganic pigment or an organic pigment may be used. Specific examples of the colorant may include a blue pigment, such as copper phthalocyanine blue, ultramarine blue, and Prussian blue; a yellow pigment, such as an azo lake pigment, chrome yellow, and zinc yellow; a red pigment, such as a condensed azo pigment, and red lead; and a black pigment, such as carbon black and black iron oxide. For luster adjustment, for example, extender pigments, such as alumina, calcium carbonates, or barium sulfates, may be used. The pigment used may be limited to one kind, or two or more kinds of pigments may be used at the same time.

As the additive agents, there may be used surface treatment agents, cross-linkers, release agents, flow improvers, or metal oxides (for example, silica, alumina, or titania) subjected to hydrophobization by processing the microparticles thereof using a silane coupling agent.

As the above described toner, a toner dedicated to each printer is preferably used, although a toner for typical copiers can be used. As the toner, either a powder toner or a liquid toner can be used. A powder toner is preferable in view of general-purpose property, for example. Meanwhile, use of a liquid toner, which generally has finer particles than those of a powder toner, can make the platelessly printed layer 22 thinner.

The thickness of the platelessly printed layer 22 may be any thickness without limitation, and is preferably 0.1 µm to 20 µm, more preferably 0.2 µm to 15 µm.

The platelessly printed layer 22 may include a background color display layer, such as a white solid printed layer. That is, the platelessly printed layer 22 may have a structure including a design display layer for showing an illustration, a letter, and so forth, and a background color display layer. Alternatively, the platelessly printed layer 22 may include only a design display layer, but not a background color display layer. In this case, the pouch container 10 may not have a background color display layer or may have a background color display layer (for example, a plate-printed background layer 26 to be described later) separately formed by a plate-based printing method, such as gravure printing. The sealant layer 21 or the like formed on the rear side of the platelessly printed layer 22 may contain a colorant so that the sealant layer 21 serves as a background color display layer, as will be described later in detail.

The above-described anchor coat layer intervenes between the base film 20 and the platelessly printed layer 22, and serves to improve adhesion of the platelessly printed layer 22 relative to the base film 20. The anchor coat layer is referred to also as a primer layer. In the case where an anchor coat layer is formed on the front side of the platelessly printed layer 22, it is preferable that the anchor coat layer is made of transparent resin. As a resin for forming an anchor coat layer, for example, polyolefin resins, polyethyleneimine resins, polybutadiene resins, isocyanate resins, polyester resins, acrylic resins, urethane resins, cellulose resins, amide resins, and rosin resins may be available. In particular, a resin for forming an anchor coat layer generally has high hydrophilicity, and may be water soluble. The anchor coat layer can be formed, for example, by applying an anchor coat agent containing the above-mentioned resin onto the base film 20 by a known conventional plate-based printing method or a coating method using general purpose coater, and then drying to solidify. The thickness of the anchor coat layer may be any thickness without limitation, and is preferably 0.1 µm to 10 µm, more preferably 0.2 µm to 3 µm.

The sealant layer 21 positioned on the rear side of the platelessly printed layer 22 may contain a desired colorant. In this reference embodiment, as no printed layer is formed between the container end faces E1, E2, E3 and the edge E22 of the platelessly printed layer 22, it is preferable to dope the sealant layer 21 with a colorant as a means for preventing the inside of the content from being seen through in such an area. The sealant layer 21 containing a colorant prevents the inside of the container from being seen through in an area where the platelessly printed layer 22 is not formed in view of design, for example, or an area where a thinner platelessly printed layer 22 is formed. Although the intermediate layer 23 or the adhesive layer 24, for example, positioned on the rear side of the platelessly printed layer 22 may contain a colorant, in addition to, or in place of, the sealant layer 21, it is preferable to dope the sealant layer 21 with a colorant.

As the colorant contained in the sealant layer 21, although any colorant may be used, and a colorant similar to the colorant to be applied to the platelessly printed layer 22, to be described later, may be used, a white pigment is normally used. The sealant layer 21 containing a white pigment prevents the inside of the container from been seen through, and improves, for example, the light shielding characteristic of the first wall-surface sheet 11. Alternatively, such a sealant layer 21 serves to make outstanding the design, such as a letter, an illustration, or the like, formed by the platelessly printed layer 22, to color the design (whitening), or to show the background color of the design. While it is normally difficult to increase the white density of the platelessly printed layer 22, containment of a white pigment in the sealant layer 21 can solve this problem. Although the sealant layer 21, or the like, can be whitened by introducing voids thereinto, doping with a white colorant is preferred in whitening the sealant layer 21.

As a white colorant, for example, a white pigment, such as titanium oxides, zinc oxides (zinc white), white leads, or Lithopones (a compound of barium sulfate and zinc sulfide) are available as examples, and titanium oxides are preferred. The content of a white colorant (for example, titanium oxides) is, for example, 20 wt% or greater relative to the total weight of the sealant layer 21, preferably 30 to 90 wt%, more preferably 40 to 80 wt%.

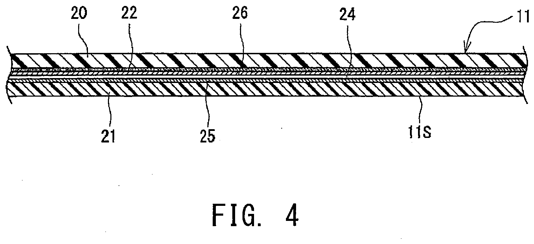

FIG. 4 shows another example of the first wall-surface sheet 11. As shown as an example in FIG. 4, the first wall-surface sheet 11 may include a metal layer 25 and a plate-printed background layer 26 formed between the base film 20 and the sealant layer 21. In the example shown in FIG. 4, the plate-printed background layer 26 is formed on the rear side of the platelessly printed layer 22, and the metal layer 25 is formed between the plate-printed background layer 26 and the sealant layer 21 via the adhesive layer 24. Although the first wall-surface sheet 11 is shown in FIG. 4, the layer structure shown as an example in FIG. 4 can be applied to the second wall-surface sheet 12 and the bottom surface gusset sheet 13 as well.

The metal layer 25 serves to improve, for example, the gas barrier characteristic and the light shielding characteristic of the first wall-surface sheet 11. The metal layer 25 may be formed through lamination or deposition of metal foil, such as aluminum foil, between the base film 20 and the sealant layer 21. In the example shown in FIG. 4, aluminum metal foil is laminated on the plate-printed background layer 26 to thereby form the metal layer 25, whose thickness is 0.1 µm to 20 µm, for example, preferably, 0.2 µm to 10 µm. Meanwhile, it is generally preferable that the thickness of the metal layer 25 as a deposited layer is less than 1 µm. A deposited layer formed from inorganic oxide, such as aluminum oxide or silica, may be formed instead of the metal layer 25. A deposited layer formed from such inorganic oxide may be formed on the front side of the platelessly printed layer 22 as such a film can be formed transparent.

The plate-printed background layer 26 is formed closer to the rear side than is the platelessly printed layer 22 between the base film 20 and the sealant layer 21, as described above. The plate-printed background layer 26 serves, for example, to color the design, such as a letter or an illustration, formed by the platelessly printed layer 22, or to show the background color of the design. As a plate-printed layer formed by a plate-based printing method can express at least some colors more vividly than can the platelessly printed layer 22, additional use of a plate-printed layer can improve the decorative characteristic of the wall-surface sheet. In the example shown in FIG. 4, the plate-printed background layer 26 may not be formed. In such a case, the color of metal attributed to the metal layer 25 is seen in an area free from the platelessly printed layer 22. The thickness of the plate-printed background layer 26 may be any thickness without limitation, and is preferably 0.1 µm to 10 µm, more preferably 0.2 µm to 3 µm.

The plate-printed background layer 26 is formed by a known conventional plate-based printing method, such as gravure printing, flexographic printing, rotary letterpress printing, or screen printing. The plate-based printing method is a printing method using a plate made in accordance with a formation pattern of a printed layer. Although any plate-based printing method without limitation may be used in formation of the plate-printed background layer 26, gravure printing or flexographic printing is preferably used, and gravure printing is particularly preferably used. On the plate-printed background layer 26, the trace of an uneven pattern of a plate, for example, is left.

The plate-printed background layer 26 contains a colorant and a binder resin, for example, and may contain various kinds of additive agents. The plate-printed background layer 26 can be formed using a known conventional oil-based ink (a solvent-based ink) or a water-based ink. The ink contains, for example, a colorant, a binder resin, any additive agent, and a solvent or dispersion medium (hereinafter referred to as a solvent, or the like), in which the binder resin and the colorant are dissolved or dispersed in the solvent or the like. The solvent or the like may be any solvent without limitation in which a binder resin or the like can be dissolved or dispersed.

The color (hue, brightness, saturation) of the plate-printed background layer 26 can be desirably set, similar to the platelessly printed layer 22, and is normally white. The plate-printed background layer 26 contains titanium oxide, for example, as a colorant. As the binder resin contained in the plate-printed background layer 26, one kind of resin or a mixture of two kinds of resins selected from acrylic resins, polyurethane resins, polyester resins, cellulose resins, polyamide resins, polyolefin resins, polyvinylchloride resins, polyvinyl acetate resins, and vinyl chloride-vinyl acetate copolymer-based resins, is available as an example. In particular, acrylic resins, urethane resins, and cellulose resins are preferable.

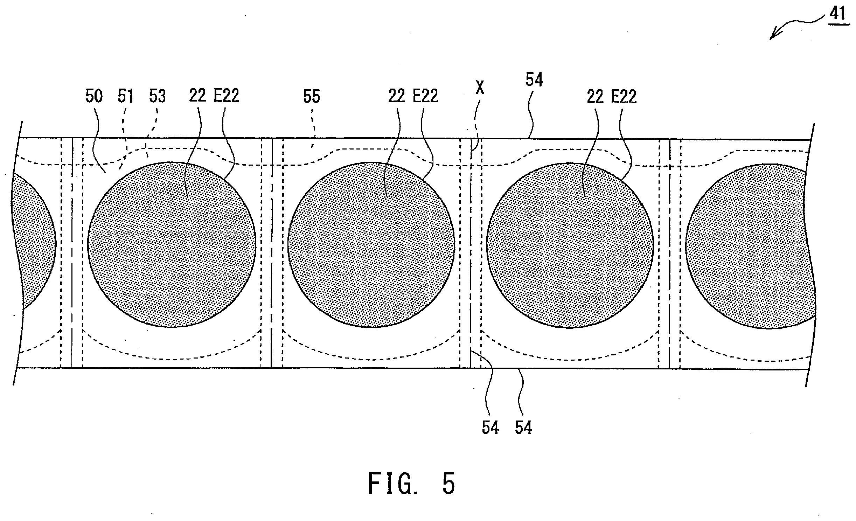

FIG. 5 is a front view of a pouch container package material 41 that is one example of the reference embodiment. As shown as an example in FIG. 5, the pouch container package material 41 is an elongate sheet member for constituting a wall-surface portion (a first wall-surface portion) of the pouch container 10. The pouch container package material 41 is cut along the planned cutting portion X into a plurality of first wall-surface sheets 11. While FIG. 5 shows the pouch container package material 41 for constituting the first wall-surface sheet 11, the format shown as an example in FIG. 5 can be used for a pouch container package material 42 for constituting the second wall-surface sheet 12. In the case where the pouch container package material for constituting the bottom surface gusset sheet 13 (an elongate bottom surface gusset sheet 43 to be described later) includes the platelessly printed layer 22, the same configuration as that of the pouch container package material 41 except a folding line defined along the longitudinal direction of the package material can be used for the elongate bottom surface gusset sheet 43.

The pouch container package material 41 includes an elongate base film 50, a sealant layer 51 formed on one surface side of the elongate base film 50, and the platelessly printed layer 22 formed between the elongate base film 50 and the sealant layer 51. It is preferable that the pouch container package material 41 contains an intermediate layer 53 formed between the elongate base film 50 and the sealant layer 51. The sealant layer 51 is an elongate member of the sealant layer 21, and the intermediate layer 53 is an elongate member of the intermediate layer 23. One surface of the elongate base film 50 corresponds to the rear surface of the base film 20 of the first wall-surface sheet 11. The respective sealant layer 51 and intermediate layer 53 are formed one on the other over one full surface of the elongate base film 50, being continuous in the longitudinal direction of the elongate base film 50. The sealant layer 51 and the intermediate layer 53 may contain a colorant, such as a white pigment, as described above.

It is preferable that the pouch container package material 41 includes the adhesive layer 24 (not shown in FIG. 5) formed on the front and rear surfaces of the intermediate layer 53. The pouch container package material 41 may include the metal layer 25 and the plate-printed background layer 26, for example, formed continuous in the longitudinal direction of the elongate base film 50.

In the pouch container package material 41, the platelessly printed layer 22 is formed such that the edge E22 thereof is defined at a position spaced apart from a planned container end face forming portion 54. The planned container end face forming portion 54 is a portion to be made into the container end faces E1, E2, E3 when the pouch container package material 41 is put in the process of manufacturing the pouch container 10, to be described later. Defining the edge E22 of the platelessly printed layer 22 at a position spaced apart from the planned container end face forming portion 54 can prevent the platelessly printed layer 22 from being exposed in the container end faces E1, E2, E3 of the pouch container 10. It is preferable that the platelessly printed layer 22 is formed on the elongate base film 50, although the platelessly printed layer 22 may be formed on the front surface, the rear surface, or both surfaces of the intermediate layer 53 or on the front surface of the sealant layer 51.

The shape, size, arrangement, or the like, of a platelessly printed area; that is, the formation pattern of the platelessly printed layer 22, can be desirably set in accordance with a design to be shown, such as a letter or an illustration, so long as the edge E22 remains spaced apart from the planned container end face forming portion 54. As a planned cutting portion X of the pouch container package material 41 is a part of the planned container end face forming portion 54, and the platelessly printed layer 22 is formed so as not to be included in the planned cutting portion X, the shape of the platelessly printed area where the platelessly printed layer 22 is formed remains the same between in the pouch container package material 41 and in the first wall-surface sheet 11.

Although the platelessly printed layer 22 may be formed in an area overlapping a planned sealing portion forming area 55 so long as the edge E22 remains spaced apart from the planned container end face forming portion 54, it is preferable that the platelessly printed layer 22 is formed while avoiding an area overlapping the planned sealing portion forming area 55. The planned sealing portion forming area 55 is an area where the sealing portions (the side sealing portion 14, the upper sealing portion 16, and the bottom sealing portion 15) are formed when the pouch container package material 41 is put in the process of manufacturing the pouch container 10, to be described later. The planned sealing portion forming area 55 includes a portion where the pouring outlet-included sealing portion is to be formed. Formation of the platelessly printed layer 22 while avoiding an area overlapping the planned sealing portion forming area 55 can reduce or eliminate the influence of heat on the platelessly printed layer 22 at the heat sealing step. In the example shown in FIG. 5, the whole edge E22 of the platelessly printed layer 22 is defined at a position not overlapping the planned sealing portion forming area 55 and is positioned in an area enclosed by the planned sealing portion forming area 55 in a plan view.

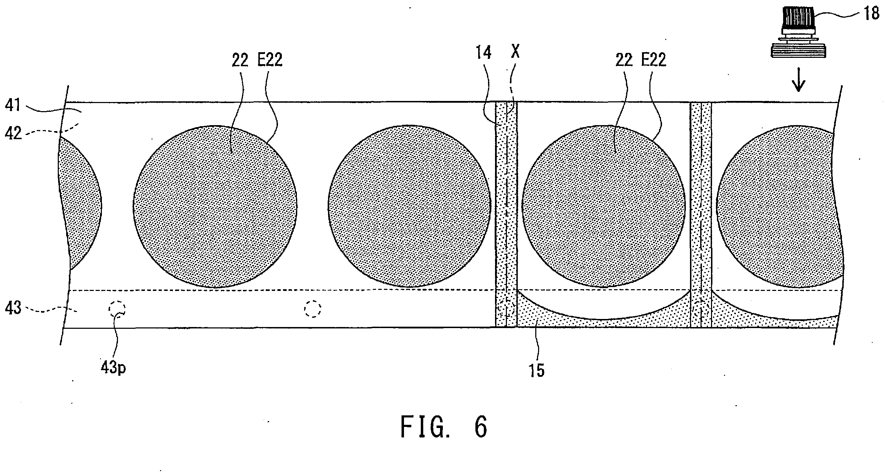

In the following, one example of a method for manufacturing the pouch container 10 will be described with reference to FIG. 6. FIG. 6 shows a step of laminating pouch container package materials to form the respective sealing portions in the process of manufacturing the pouch container 10. The longitudinal direction of the pouch container package material will be defined as the "MD direction," and the width direction is defined as the "TD direction."

The manufacturing process of the pouch container 10 includes a step of making a pouch container package material, a step of bonding the opposed rear surfaces of the pouch container package materials placed one on the other to thereby form a sealing portion, and a step of cutting the pouch container package materials with the sealing portion formed therein into sizes corresponding to the respective pouch containers 10. In the manufacturing process of the pouch container 10C to be described later, for example, while one pouch container package material is kept folded, the opposed rear surfaces are bonded to each other, to thereby form a sealing portion.

As shown as an example in FIG. 6, the pouch container package material for use in manufacturing of the pouch container 10 includes the pouch container package material 41, the pouch container package material 42, and the elongate bottom surface gusset sheet 43. A package material having the same layer structure as that of the pouch container package material 41 can be used for the pouch container package material 42. The pouch container package material 42 differs from the pouch container package material 41, for example, only in the formation pattern of the platelessly printed layer 22. The elongate bottom surface gusset sheet 43 differs from the pouch container package material 41 in that, for example, the platelessly printed layer 22 is not formed and that a folding line is defined along the MD direction. It is preferable that the elongate bottom surface gusset sheet 43 has through holes 43p that make the cut-outs 17 formed in the MD direction at substantially equal intervals.

The step of making the pouch container package material 41 (same for the pouch container package material 42) includes the following steps.
(1) A first step of forming the elongate base film 50. The elongate base film 50 can be formed by a well-practiced film forming method, such as a melt extrusion method. The elongate base film 50 may be made using a commercially available elongate film.
(2) A second step of forming the platelessly printed layer 22 by a plateless printing method in a position spaced apart from the planned container end face forming portion 54 on one surface constituting the rear surface of the elongate base film 50.
(3) A third step of forming the sealant layer 51 on the one surface of the elongate base film 50 so as to cover the platelessly printed layer 22. In the third step, for example, an elongate film for constituting the intermediate layer 53 and an elongate film for constituting the sealant layer 51 are laminated on the elongate base film 50 with the platelessly printed layer 22 formed thereon, whereby the intermediate layer 53 and the sealant layer 51 are formed, respectively.

In the second step, the platelessly printed layer 22 is formed by a plateless printing method. As a plateless printing method, an electrophotographic process using a toner is preferably employed, as described above. For example, an electrophotographic printer using toner charges a photoreceptor drum, draws with a laser beam on an area with toner deposition thereon not desired to thereby discharge the area, adheres a toner in a desired pattern onto the photoreceptor drum, and translates the toner onto the elongate base film 50, whereby the platelessly printed layer 22 is formed. The translated toner is heated to be melted and fixed onto the elongate base film 50. As the toner, a toner dedicated to each printer is preferably used, although a toner for typical copiers can be used.

As an electrophotographic printer, commercially available printers can be used. Commercially available preferable products include "LP-S9000 series" from Seiko Epson Corporation, "SPC831/831M," "SPC830/830M," "SPC810-ME," and "SPC731/731M," "SPC730/730M" from Ricoh Company, Ltd., "HP Indigo WS20000," "HP Indigo WS6600," "HP Indigo WS6000," and "HP Indigo WS4600" from Hewlett-Packard Company, and "DocuPrint C5000," "DocuPrint C4000," "DocuPrint C3360," and "DocuPrint C3350" from Fuji Xerox, Co., Ltd., or the like.

In the second step, the platelessly printed layer 22 is formed on one surface of the elongate base film 50 in a position spaced apart from the planned container end face forming portion 54, preferably while avoiding an area overlapping the planned sealing portion forming area 55 where the respective sealing portions are to be formed. That is, the platelessly printed layer 22 is formed in such a manner that the edge E22 thereof is not positioned at least in the planned container end face forming portion 54, preferably not in the planned sealing portion forming area 55. On one surface of the elongate base film 50, an anchor coat layer may be formed. In this case, it is preferable that the platelessly printed layer 22 is formed so as not to protrude from the anchor area where the anchor coat layer is formed.

In the manufacturing process of the pouch container 10, the respective resultant pouch container package materials are laminated one on the other before formation of the sealing portions. Specifically, the pouch container package material 41 and the pouch container package material 42 are put together with the rear surfaces thereof with the sealant layer 51 formed thereon facing each other, and the elongate bottom surface gusset sheet 43 is inserted into a lower part of the pouch container package materials 41, 42. The elongate bottom surface gusset sheet 43 is inserted in such a manner that the rear surface thereof with the sealant layer 51 formed thereon is opposed to the respective rear surfaces of the pouch container package materials 41, 42. Subsequently, the side sealing portion 14 and the bottom sealing portion 15 are formed in the respective pouch container package materials laminated. The side sealing portion 14, the bottom sealing portion 15, and the upper sealing portion 16 to be formed in a subsequent step are formed through heat sealing.

Thereafter, the laminate including the respective pouch container package materials with the side sealing portion 14 and the bottom sealing portion 15 formed is cut in the planned cutting portion X along the TD direction with a die cut roller, for example, into sizes corresponding to the respective pouch containers 10. Then, with the spout of the outlet plug 18 held between the upper portions of the first wall-surface sheet 11 and those of the second wall-surface sheet 12, the upper portion of the container is heat sealed, whereby the upper sealing portion 16 including the pouring outlet-included sealing portion is formed.

As described above, the pouch container 10 shown in FIG. 1 can be formed by a simple and highly productive method using an elongate pouch container package material. In the manufacturing process of the pouch container 10, for example, contents are poured into the inside space of the container via the open upper portion of the container before formation of the upper sealing portion 16. Alternatively, contents are poured with the pouch container package materials placed one on the other with the side sealing portion 14 and the bottom sealing portion 15 formed, before formation of the upper sealing portion 16 and separation into the respective container sizes.

As described above, the pouch container 10 can highly likely prevent occurrence of detachment or deterioration of the printed layer due to the influence of moisture or the like having invaded via the container end faces on the platelessly printed layer 22, as the edge E22 of the platelessly printed layer 22 is not exposed in the container end faces E1, E2, E3. Further, as the platelessly printed layer 22 is not formed in an area overlapping the sealing portions, the influence of heat on the platelessly printed layer 22 in formation of the sealing portion can be reduced or eliminated. This can further reduce occurrence of detachment, deterioration, or the like of the platelessly printed layer 22.

FIG. 7 illustrate a pouch container 10B according to an embodiment of the present invention. FIGs. 8 to 10 illustrate pouch containers 10C, 30, and 30A, respectively, which are other examples of the reference embodiment. The pouch containers 10B, 10C are standing pouches having a bottom surface gusset portion, similar to the pouch container 10, while the pouch containers 30, 30A are side gusset pouches having a side surface gusset portion.

As shown as an example in FIG. 7, in the pouch container 10B, at least one of the wall-surface portions has a plate-printed layer 27 formed between a container end face and the edge E22 of the platelessly printed layer 22. In the pouch container 10B, for example, each of the first wall-surface sheet 11B and the second wall-surface sheet 12B has a plate-printed layer 27 formed between the container end face E1 and the edge E22 of the platelessly printed layer 22. It is preferable that the plate-printed layer 27 is formed through gravure printing or flexographic printing, similar to the plate-printed background layer 26 (see FIG. 4) formed on the rear side of the platelessly printed layer 22. The trace of an uneven pattern of the plate, for example, is left on the plate-printed layer 27. The plate-printed layer 27 shows a product name, an illustration, the name of a manufacturer, a logo, a product explanation, or the like, similar to the platelessly printed layer 22, for example.

The edge E22 of the platelessly printed layer 22 is defined at a position spaced apart from the container end face E1, as described above. As it is preferable that the platelessly printed layer 22 is formed while avoiding an area overlapping the sealing portion, such as the side sealing portion 14, there is an area without a design printed layer for showing a letter or an illustration, for example, left between the container end face E1 and the edge E22. Formation of the plate-printed layer 27 between the container end face E1 and the edge E22 enables display of a letter, an illustration, or the like, in the area. The plate-printed layer 27 may be formed in an area overlapping the side sealing portion 14 and may be exposed in the container end face E1, as the plate-printed layer 27 is superior to the platelessly printed layer 22 in water resistance and heat resistance.

The plate-printed layer 27 is formed, for example, on the rear surface of the base film 20. Although the edge E22 of the platelessly printed layer 22 may remain spaced apart from the edge of the plate-printed layer 27, it is preferable that the edge E22 of the platelessly printed layer 22 overlaps the edge of the plate-printed layer 27, so that the boundary between the printed layers appears less outstanding for better design property. In the portion where the printed layers overlap, the plate-printed layer 27 may be formed closer to the front side than the platelessly printed layer 22 is. In the first wall-surface sheet 11B and the second wall-surface sheet 12B, the plate-printed background layer 26 may be formed on the rear surface side of the platelessly printed layer 22 and the plate-printed layer 27, and, further, the intermediate layer 23 and the metal layer 25, for example, may be formed.

As shown as an example in FIG. 8, the pouch container 10C is different from the pouch container 10 in that a plurality of wall-surface portions are made using one wall-surface sheet 19. The pouch container 10C has a first wall-surface portion 19x, a second wall-surface portion 19y opposed to the first wall-surface portion 19x, and a bottom surface gusset portion 19z, but does not have a container end face E2 between the first wall-surface portion 19x and the bottom surface gusset portion 19z and between the second wall-surface portion 19y and the bottom surface gusset portion 19z (no end face is formed on the lower end of the container). The respective wall-surface portions are formed, for example, by matching the respective ends of the wall-surface sheet 19 in the longitudinal direction, with the rear surface of the wall-surface sheet 19 inside, and, while assuming the matched ends as the upper end of the container, folding upward the middle portion of the wall-surface sheet 19 in the longitudinal direction and then heat-sealing the respective edges of the sheet. The bottom surface gusset portion 19z is formed at the middle of the wall-surface sheet 19 in the longitudinal direction and sandwiched between the first wall-surface portion 19x and the second wall-surface portion 19y. The bottom surface gusset portion 19z is bonded to the rear surfaces of the first wall-surface portion 19x and the second wall-surface portion 19y via the bottom sealing portion 15, so as to extend.

In the pouch container 10C as well, the edge E22 of the platelessly printed layer 22 is defined at a position spaced apart from the container end face. In the pouch container 10C, as no end face is formed on the lower end of the container, it is sufficient that the edge E22 of the platelessly printed layer 22 is positioned spaced apart from the container end faces E1, E3 (the upper end of the container, and the respective lateral ends of the container). That is, in the pouch container 10C, the platelessly printed layer 22 can be formed so as to extend to the lower end of the first wall-surface portion 19x and the second wall-surface portion 19y. Alternatively, the platelessly printed layer 22 can be formed so as to extend beyond the lower end of the first wall-surface portion 19x and continue to the bottom surface gusset portion 19z or further to the second wall-surface portion 19y.

As shown as an example in FIG. 9, the pouch container 30 is a side gusset pouch having a first wall-surface sheet 31, a second wall-surface sheet 32, and a pair of side surface gusset sheets 33, 34 provided between the first wall-surface sheet 31 and the second wall-surface sheet 32. A pouring outlet, such as the outlet plug 18, is formed on the upper end of the pouch container 30. The first wall-surface sheet 31 constitutes the first wall-surface portion, and the second wall-surface sheet 32 constitutes the second wall-surface portion opposed to the first wall-surface portion. The pair of side surface gusset sheets 33, 34 are sheet members constituting the side surface gusset portions that extend as a result of storage of contents. The pouch container 30 includes four wall-surface sheets, and the edges of the respective wall-surface sheets and the sealing portions formed in the vicinity of the edges seal the inside space of the container .

The pouch container 30 has side sealing portions 35 for bonding the first wall-surface sheet 31 and the second wall-surface sheet 32 via the respective side surface gusset sheets 33, 34, and an upper sealing portion (not shown) and a bottom sealing portion (not shown) for directly bonding the first wall-surface sheet 31 and the second wall-surface sheet 32. Each wall-surface sheet includes at least the base film 20 and the sealant layer 21, similar to the above described embodiment, and each sealing portion is formed through heat sealing. In the pouch container 30, the container end faces E1, E2, E3 are formed on the respective lateral ends, the upper end, and lower end of the container, respectively. In the example shown in FIG. 9, the container end face E1 is formed at four positions between the first and second wall-surface sheets 31, 32 and the side surface gusset sheets 33, 34 in a pair.

In the pouch container 30, the platelessly printed layer 22 is formed in the first wall-surface sheet 31 and the second wall-surface sheet 32, for example. In the pouch container 30 as well, the edge E22 of the platelessly printed layer 22 is defined at a position spaced apart from the container end face. It is preferable that the platelessly printed layer 22 is formed while avoiding an area overlapping the sealing portions of the side sealing portion 35 or the like. The above-described structure including, for example, the intermediate layer 23, the adhesive layer 24, the metal layer 25, the plate-printed background layer 26, and the plate-printed layer 27 is applicable to the pouch container 30 and a pouch container 30A to be described later.

As shown as an example in FIG. 10, the pouch container 30A differs from the pouch container 30 in that a plurality of wall-surface portions are made using one wall-surface sheet 36. Similar to the pouch container 30, the pouch container 30A has a first wall-surface portion 36v, a second wall-surface portion 36w opposed to the first wall-surface portion 36v, and a pair of side surface gusset portions 36x, 36y, in which these wall-surface portions are made from one wall-surface sheet 36. These wall-surface portions are formed, for example, by matching the respective both ends of the wall-surface sheet 36 in the longitudinal direction while having the rear surface of the wall-surface sheet 36 inside, then forming the side sealing portion 36 along the matched ends while assuming the matched both ends as one lateral end of the container, further folding inward the portions of the wall-surface sheet 36 that are to constitute the side surfaces of the container, and heat-sealing the upper and lower edges of the sheet. The side surface gusset portions 36x, 36y are sandwiched between the first wall-surface portion 36v and the second wall-surface portion 36w and extend as a result of storage of contents.

It is preferable that the pouch container 30A has a shape retaining sealing portion 37 that is a sealing portion for retaining the shape of the container, formed on three lateral ends of the container, where no container end face E1 is formed. The shape retaining sealing portion 37 is formed by heat-sealing the rear surfaces of the wall-surface sheets, similar to the side sealing portion 35.

In the pouch container 30A as well, the edge E22 of the platelessly printed layer 22 is defined at a position spaced apart from the container end face. In the pouch container 30A, as no container end face E1 is formed on three lateral ends of the container out of the four lateral ends of the container, it is sufficient that the edge E22 of the platelessly printed layer 22 is positioned spaced apart from one container end face E1 and container end faces E2, E3 (not shown). It is preferable that the platelessly printed layer 22 is formed while avoiding an area overlapping the sealing portion (including the shape retaining sealing portion 37). In the example shown in FIG. 10, the platelessly printed layer 22 is formed continuous from the side surface gusset portion 36x, through the first wall-surface portion 36v and the side surface gusset portion 36y, to the second wall-surface sheet 36w. In this reference embodiment, there is only one container end face E1. This is more preferable, as detachment and deterioration of the platelessly printed layer 22 is relatively unlikely caused.

### REFERENCE SIGNS LIST

- 10, 10B, 10C: pouch container
- 11, 11B: first wall-surface sheet
- 11S: rear surface
- 12, 12B: second wall-surface sheet
- 12S: rear surface
- 13: bottom surface gusset sheet
- 14: side sealing portion
- 15: bottom sealing portion
- 16: upper sealing portion
- 17: cut-out
- 18: outlet plug
- 19: wall-surface sheet
- 19x: first wall-surface portion
- 19y: second wall-surface portion
- 19z: base-surface gusset portion
- 20: base film
- 21: sealant layer
- 22: platelessly printed layer
- 23: intermediate layer
- 24: adhesive layer
- 25: metal layer
- 26: plate-printed background layer
- 27: plate-printed layer
- 30, 30A: pouch container
- 31: first wall-surface sheet
- 32: second wall-surface sheet
- 33, 34: side surface gusset sheet
- 35: side sealing portion
- 36: wall-surface sheet
- 36v: first wall-surface portion
- 36w: second wall-surface portion
- 36x, 36y: side surface gusset portion
- 37: shape retaining sealing portion
- 41, 42: pouch container package material
- 43: elongate bottom surface gusset sheet
- 43p: through hole
- 50: elongate base film
- 51: sealant layer
- 53: intermediate layer
- 54: planned container end face forming portion
- 55: planned sealing portion forming area
- E1, E2, E3, E4: container end face
- E22: edge
- X: planned cutting portion

## Claims

1. A pouch container (10B) comprising at least a first wall-surface portion (11B) and a second wall-surface portion (12B) opposed to the first wall-surface portion (11B) as wall-surface portions (11B, 12B), and also comprising a sealing portion (14, 15, 16) where rear surfaces (11S, 12S) of the respective wall-surface portions (11B, 12B) are bonded to each other, wherein
the first and second wall-surface portions (11B, 12B) each include a base film (20) and a sealant layer (21) provided on a rear surface side of the base film (20),
at least one of the first and second wall-surface portions (11B, 12B) includes a platelessly printed layer (22) formed between the base film (20) and the sealant layer (21), and
an edge (E22) of the platelessly printed layer (22) is defined at a position spaced apart from a container end face (E1, E2, E3), **characterized in that**
at least one of the first and second wall-surface portions (11B, 12B) includes a plate-printed layer (27) formed between the container end face (E1) and the edge (E22) of the platelessly printed layer (22) so that the plate-printed layer (27) is exposed in the container end face (E1), wherein
the edge (E22) of the platelessly printed layer (22) overlaps an edge of the plate-printed layer (27), or the edge (E22) of the platelessly printed layer (22) is spaced apart from the edge of the plate-printed layer (27) such that the plate-printed layer (27) does not overlap with the platelessly printed layer (22).

2. The pouch container (10) according to claim 1, wherein the platelessly printed layer (22) is formed while avoiding an area overlapping the sealing portion (14, 15, 16).

3. The pouch container (10) according to claim 1 or 2, wherein the sealant layer (21) contains a colorant.

4. A pouch container package material (41) for constituting a wall-surface portion (11, 12) of the pouch container (10) according to claim 1, comprising:
an elongate base film (20);
a sealant layer (21) provided on one surface side of the elongate base film (20); and
a platelessly printed layer (22) formed between the elongate base film (20) and the sealant layer (21),
**characterized in that**
an edge (E22) of the platelessly printed layer (22) is defined at a position spaced apart from a planned container end face forming portion (54),
a plate-printed layer (27) is formed between the planned container end face forming portion (54) and the edge (E22) of the platelessly printed layer (22) so that the plate-printed layer (27) is configured to be exposed in the container end face (E1), and
the edge (E22) of the platelessly printed layer (22) overlaps an edge of the plate-printed layer (27), or the edge (E22) of the platelessly printed layer (22) is spaced apart from the edge of the plate-printed layer (27) such that the plate-printed layer (27) does not overlap with the platelessly printed layer (22).

5. The pouch container package material (41) according to claim 4, wherein the platelessly printed layer (22) is formed while avoiding an area overlapping a planned sealing portion forming area (55).

6. A method for manufacturing the pouch container (10) of claim 1 comprising:
a step of making the pouch container package material (41) of claim 4 for constituting a wall-surface portion (11, 12) of the pouch container (10);
a step of bonding opposed rear surfaces (11S, 12S) to each other among a plurality of pouch container package materials (41) laminated or from the pouch container package material (41) folded to thereby form a sealing portion (14, 15, 16); and
a step of cutting the pouch container package material (41) where the sealing portion (14, 15, 16) is formed into a size corresponding to the pouch container (10);
wherein
the step of making the pouch container package material (41) includes
a first step of preparing an elongate base film (20),
a second step of forming a platelessly printed layer (22) at a position spaced apart from a planned container end face forming portion (54) on one surface that constitutes a rear surface of the elongate base film (20), by a plateless printing method, and
a third step of forming a sealant layer (21) on the one surface of the elongate base (20) film so as to cover the platelessly printed layer.

7. The method for manufacturing a pouch container (10) according to claim 6, wherein in the second step, the platelessly printed layer is formed while avoiding an area overlapping a planned sealing portion forming area (55) where to form the sealing portion (14, 15, 16).

## Patentansprüche

1. Beutelbehälter (10B) mit zumindest einem ersten Wandflächenabschnitt (11B) und einem zweiten Wandflächenabschnitt (12B), der dem ersten Wandflächenabschnitt (11B) gegenüberliegt, als Wandflächenabschnitten (11B, 12B), und zudem mit einem Versiegelungsabschnitt (14, 15, 16), an dem Rückflächen (11S, 12S) der jeweiligen Wandflächenabschnitte (11B, 12B) miteinander verbunden sind, wobei
die ersten und zweiten Wandflächenabschnitte (11B, 12B) jeweils einen Basisfilm (20) und eine Versiegelungsschicht (21) umfassen, die auf einer Rückflächenseite des Basisfilms (20) vorgesehen ist,
zumindest entweder der erste oder der zweite Wandflächenabschnitt (11B, 12B) eine plattenlos gedruckte Schicht (22) aufweist, die zwischen dem Basisfilm (20) und der Versiegelungsschicht (21) ausgebildet ist, und
ein Rand (E22) der plattenlos gedruckten Schicht (22) an einer von einer Behälterstirnfläche (E1, E2, E3) beabstandeten Position definiert ist, **dadurch gekennzeichnet, dass**
mindestens entweder der erste oder zweite Wandflächenabschnitt (11B, 12B) eine plattengedruckte Schicht (27) aufweist, die zwischen der Behälterstirnfläche (E1) und dem Rand (E22) der plattenlos gedruckten Schicht (22) ausgebildet ist, so dass die plattengedruckte Schicht (27) in der Behälterstirnfläche (E1) freiliegt, wobei
der Rand (E22) der plattenlos gedruckten Schicht (22) einen Rand der plattengedruckten Schicht (27) überlappt oder der Rand (E22) der plattenlos gedruckten Schicht (22) vom Rand der plattengedruckten Schicht (27) so beabstandet ist, dass die plattengedruckte Schicht (27) nicht die plattenlos gedruckte Schicht (22) überlappt.

2. Beutelbehälter (10) nach Anspruch 1, wobei die plattenlos gedruckte Schicht (22) unter Vermeidung eines den Versiegelungsabschnitt (14, 15, 16) überlappenden Bereichs gebildet ist.

3. Beutelbehälter (10) nach Anspruch 1 oder 2, wobei die Versiegelungsschicht (21) ein Färbemittel enthält.

4. Beutelbehälterverpackungsmaterial (41) zum Bilden eines Wandflächenabschnitts (11, 12) des Beutelbehälters (10) nach Anspruch 1, mit:
einem länglichen Basisfilm (20);
einer Versiegelungsschicht (21), die auf einer Oberflächenseite des länglichen Basisfilms (20) vorgesehen ist; und
einer plattenlos gedruckte Schicht (22), die zwischen dem länglichen Basisfilm (20) und der Versiegelungsschicht (21) gebildet ist,
**dadurch gekennzeichnet, dass**
ein Rand (E22) der plattenlos gedruckten Schicht (22) an einer Position definiert ist, die von einem planmäßig die Behälterstirnfläche bildenden Abschnitt (54) beabstandet ist,
eine plattengedruckte Schicht (27) zwischen dem planmäßig die Behälterstirnfläche bildenden Abschnitt (54) und dem Rand (E22) der plattenlos gedruckten Schicht (22) gebildet wird, so dass die plattengedruckte Schicht (27) dazu aufgebaut ist, in der Behälterstirnfläche (E1) freizuliegen, und
der Rand (E22) der plattenlos gedruckten Schicht (22) ein Rand der plattengedruckten Schicht (27) überlappt oder der Rand (E22) der plattenlos gedruckten Schicht (22) vom Rand der plattengedruckten Schicht (27) so beabstandet ist, dass die plattengedruckte Schicht (27) nicht mit der plattenlos gedruckten Schicht (22) überlappt.

5. Beutelbehälterverpackungsmaterial (41) nach Anspruch 4, wobei beim Bilden der plattenlos gedruckten Schicht (22) ein Bereich vermieden wird, der einen Bereich (55) für das planmäßige Bilden des Versiegelungsabschnitts überlappt.

6. Verfahren zur Herstellung des Beutelbehälters (10) nach Anspruch 1 mit:
einem Schritt des Herstellens des Beutelbehälterverpackungsmaterials (41) nach Anspruch 4 zum Bilden eines Wandflächenabschnitts (11, 12) des Beutelbehälters (10);
einem Schritt des Miteinanderverbindens einander gegenüberliegender rückseitiger Oberflächen (11S, 12S) aus mehreren Beutelbehälterverpackungsmaterialien (41), die laminiert oder aus dem Beutelbehälter-Verpackungsmaterial (41) gefaltet sind, um dadurch einen Versiegelungsabschnitt (14, 15, 16) zu bilden; und
einem Schritt des Schneidens des Beutelbehälterverpackungsmaterials (41), bei dem der Versiegelungsabschnitt (14, 15, 16) in eine zum Beutelbehälter (10) passende Größe geformt wird;
wobei
der Schritt der Herstellung des Beutelbehälterverpackungsmaterials (41) Folgendes umfasst:
einen erster Schritt der Vorbereitung eines länglichen Basisfilms (20),
einen zweiten Schritt des Bildens einer plattenlos gedruckten Schicht (22) an einer Position, die von einem planmäßig die Behälterstirnfläche bildenden Abschnitt (54) beabstandet ist, auf einer Fläche, die eine rückseitige Oberfläche des länglichen Basisfilms (20) bildet, durch ein plattenloses Druckverfahren, und
einen dritten Schritt des Bildens einer Versiegelungsschicht (21) auf der einen Fläche des länglichen Basisfilms (20), um die plattenlos gedruckte Schicht abzudecken.

7. Verfahren zur Herstellung eines Beutelbehälters (10) nach Anspruch 6, wobei im zweiten Schritt die plattenlos gedruckte Schicht gebildet wird, während ein Bereich vermieden wird, der einen Bereich (55) für das planmäßige Bilden des Versiegelungsabschnitts überlappt, in dem der Versiegelungsabschnitt (14, 15, 16) bildbar ist.

## Revendications

1. Récipient de poche (10B) comprenant au moins une première portion de surface de paroi (11B) et une seconde portion de surface de paroi (12B) opposée à la première portion de surface de paroi (11B) comme portions de surfaces de parois (11B, 12B), et comprenant également une portion d'étanchéité (14, 15, 16) où des surfaces arrière (11S, 12S) des portions de surfaces de parois respectives (11B, 12B) sont liées les unes aux autres, dans lequel
les première et seconde portions de surfaces de parois (11B, 12B) comprennent chacune un film de base (20) et une couche d'étanchéité (21) fournie sur un côté de surface arrière du film de base (20),
au moins une des première et seconde portions de surfaces de parois (11B, 12B) inclut une couche imprimée sans plaque (22) formée entre le film de base (20) et la couche d'étanchéité (21), et
un bord (E22) de la couche imprimée sans plaque (22) est défini à une position espacée éloignée d'une face d'extrémité de récipient (E1, E2, E3), **caractérisé en ce que**
au moins une des première et seconde portions de surfaces de parois (11B, 12B) inclut une couche imprimée avec plaque (27) formée entre la face d'extrémité de récipient (E1) et le bord (E22) de la couche imprimée sans plaque (22) de sorte que la couche imprimée avec plaque (27) est exposée dans la face d'extrémité de récipient (E1), dans lequel
le bord (E22) de la couche imprimée sans plaque (22) chevauche un bord de la couche imprimée avec plaque (27), ou le bord (E22) de la couche imprimée sans plaque (22) est espacé du bord de la couche imprimée avec plaque (27) de sorte que la couche imprimée avec plaque (27) ne chevauche pas la couche imprimée sans plaque (22).

2. Récipient de poche (10) selon la revendication 1, dans lequel la couche imprimée sans plaque (22) est formée tout en évitant qu'une surface chevauche la portion d'étanchéité (14, 15, 16).

3. Récipient de poche (10) selon la revendication 1 ou 2, dans lequel la couche d'étanchéité (21) contient un colorant.

4. Matériau d'emballage de récipient de poche (41) pour constituer une portion de surface de paroi (11, 12) du récipient de poche (10) selon la revendication 1, comprenant :
un film de base allongé (20) ;
une couche d'étanchéité (21) fournie sur un côté de surface du film de base allongé (20) ; et
une couche imprimée sans plaque (22) formée entre le film de base allongé (20) et la couche d'étanchéité (21),
**caractérisé en ce que**
un bord (E22) de la couche imprimée sans plaque (22) est défini à une position espacée d'une portion formant une face d'extrémité de récipient aplanie (54),
une couche imprimée avec plaque (27) est formée entre la portion formant une face d'extrémité de récipient aplanie (54) et le bord (E22) de la couche imprimée sans plaque (22) de sorte que la couche imprimée avec plaque (27) est configurée pour être exposée dans la face d'extrémité de récipient (E1), et
le bord (E22) de la couche imprimée sans plaque (22) chevauche un bord de la couche imprimée avec plaque (27), ou le bord (E22) de la couche imprimée sans plaque (22) est espacé du bord de la couche imprimée avec plaque (27) de sorte que la couche imprimée avec plaque (27) ne chevauche pas la couche imprimée sans plaque (22).

5. Matériau d'emballage de récipient de poche (41) selon la revendication 4, dans lequel la couche imprimée sans plaque (22) est formée tout en évitant qu'une surface chevauche une surface formant une portion d'étanchéité aplanie (55).

6. Procédé de fabrication du récipient de poche (10) de la revendication 1 comprenant :
une étape de fabrication du matériau d'emballage de récipient de poche (41) de la revendication 4 pour constituer une portion de surface de paroi (11, 12) du récipient de poche (10) ;
une étape de liaison de surfaces arrière opposées (11S, 12S) les unes aux autres parmi plusieurs des matériaux d'emballages de récipients de poches (41) stratifiés ou à partir du matériau d'emballage de récipient de poche (41) plié pour former par-là une portion d'étanchéité (14, 15, 16) ; et
une étape de découpe du matériau d'emballage de récipient de poche (41) où la portion d'étanchéité (14, 15, 16) est formée dans une dimension correspondant au récipient de poche (10) ;
dans lequel
l'étape de fabrication du matériau d'emballage de récipient de poche (41) inclut
une première étape de préparation d'un film de base allongé (20),
une seconde étape de formation d'une couche imprimée sans plaque (22) à une position espacée d'une portion formant une face d'extrémité de récipient aplanie (54) sur une surface qui constitue une surface arrière du film de base allongé (20), par un procédé d'impression sans plaque, et
une troisième étape de formation d'une couche d'étanchéité (21) sur la une surface du film de base allongé (20) afin de couvrir la couche imprimée sans plaque.

7. Procédé de fabrication d'un récipient de poche (10) selon la revendication 6, dans lequel dans la seconde étape, la couche imprimée sans plaque est formée tout en évitant qu'une surface chevauche une surface formant une portion d'étanchéité aplanie (55) où former la portion d'étanchéité (14, 15, 16).
